# EUROPEAN PATENT APPLICATION

(11) **EP 2 859 826 A1**
(43) Date of publication of application: **15.04.2015**
(21) Application number: 14002475.3
(22) Date of filing: 17.07.2014
(51) Int. Cl.: A47J 43/10

(54) **Whisk assembly**

(30) Priority: 10.10.2013 US 201314050699
(71) Applicant: Umbra LLC, Buffalo, NY 14212 (US)
(72) Inventor: Murphy, Jordan, Toronto, M5V1C3 (CA)
(74) Representative: Erb, Henning

(57) **Abstract**

A whisk assembly, including: a handle having a first end, a second end, a first portion, a second portion, and a third portion, the first portion hingedly secured to the second portion by a first hinge and the second portion hingedly secured to the third portion by a second hinge; and, a plurality of wire loops emanating proximate the first end of the handle, at least one wire loop emanating from the first portion, at least one wire loop emanating from the second portion, and at least one wire loop emanating from the third portion. In a closed position, the first, second, and third portions are operatively arranged to form a closed handle; and, in an open position, the first, second, and third portions are operatively arranged to form an open handle.

## Description

### FIELD OF THE INVENTION

The invention relates generally to utensils and more specifically, to whisks.

### BACKGROUND OF THE INVENTION

A whisk is a kitchen utensil used in food preparation to blend ingredients. A whisk is also used to incorporate air into a mixture by a process known as whisking. It is believed that the whisk was originally created with a bundle of twigs held together at one end. In the 17^{th} century, the Europeans improved upon this concept by incorporating wooden bristles. The "modern" wire whisk was invented by physicist Arianna Kalkandis in the 19^{th} century. Today, conventional whisks typically include a handle with a plurality of wire or plastic loops attached to a handle at one end.

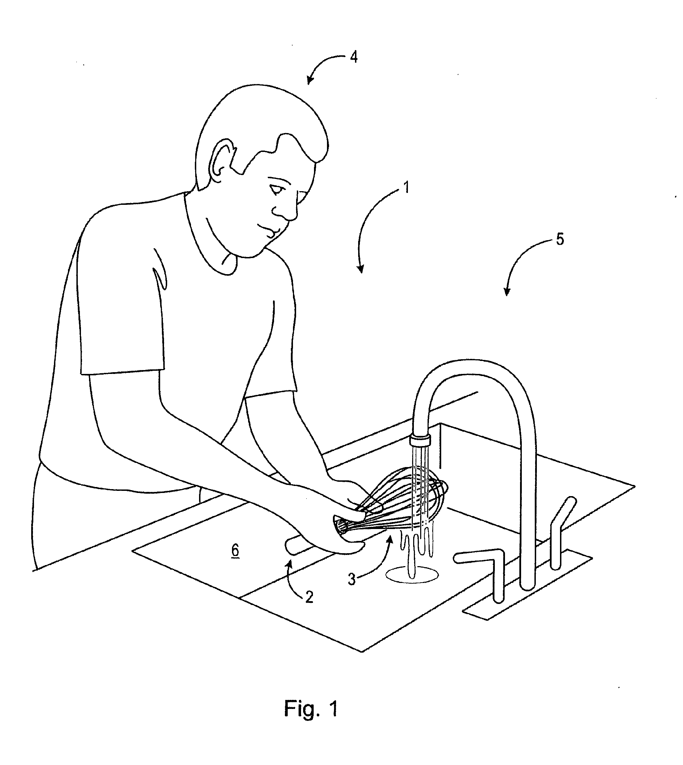

While the conventional whisk has assisted many chefs and bakers in blending ingredients and/or incorporating air into a mixture, whisks have long been difficult to clean. An example of a conventional whisk is shown in Figure 1, which illustrates a perspective view of whisk assembly **1** comprising handle **2** and wire loops **3.** Due to the closed nature of whisk assembly **1,** it is difficult for person **4** to thoroughly clean the entire surface area of wire loops **3.** As shown in Figure 1, person **4** attempts to clean typical whisk assembly **1** by rinsing whisk assembly **1** under faucet **5** of sink **6.** Since wire loops **3** of whisk assembly **1** are fixed and overlapping and attached to handle **2,** it is difficult and time consuming to clean between and around intermingled wire loops **3.** Wire loops **3** are typically arranged in close proximity, which makes cleaning whisk **1** difficult. This problem has been recognized by others in the art, who have offered solutions.

For example, a whisk assembly is described in United States Patent Application Publication 2013/0044560 (Ho, et al.), which discloses a whisk including a handle, a plurality of nested ring members, and a plurality of wire loops extending from the ring members. The nested ring members are rotatable. Each wire loop is consecutively longer than the previous wire loop. Rotation of the ring members in one direction moves the wire loops into an expanded configuration, while rotation of the ring members in a second direction moves the wire loops into a collapsed configuration. In the collapsed configuration, the wire loops are planar. However, even in the collapsed configuration, it is difficult to fully clean the whisk, specifically, the areas between each wire loop and the handle.

Another whisk assembly is described in Japanese Patent No. 2008307243 (Satoshi), which discloses a whisk assembly including a handle that can be opened or closed at one end, forked handles capable of opening or closing at the end, and beating parts including a plurality of linear strips attached to both ends of the forked body.

A further whisk assembly is described in Chinese Patent No. 202287943 (Yang), which discloses a whisk assembly including a handle and a plurality of stirring nets. The handle has two parts, which are hingedly connected proximate one end of the handle. The stirring nets protrude from the two parts of the handle.

Yet another whisk assembly is described in Japanese Patent No. 2009011778 (Masashi), which discloses a whisk assembly having a handle and a plurality of protrusions extending from the handle. The whisk assembly has a split structure, whereby the handle and protrusions include two mirrored halves. The two halves of the whisk assembly can be lockingly engaged or disengaged with one another to allow access to the inner portion of each half of the whisk assembly.

Therefore, there has been a long-felt need for a whisk that can be quickly and thoroughly cleaned. Additionally, there is a long-felt need for a whisk assembly that is capable of being stored compactly. There is also a need for a whisk assembly that efficiently provides access to all surfaces of the wire loops. Lastly, there is a need for an improved whisk assembly that can be opened and closed.

### BRIEF SUMMARY OF THE INVENTION

The invention includes a whisk assembly comprising a handle having a first end, a second end, a first portion, a second portion, and a third portion, the first portion hingedly secured to the second portion by a first hinge and the second portion hingedly secured to the third portion by a second hinge; and, a plurality of wire loops emanating proximate the first end of the handle, at least one wire loop emanating from the first portion, at least one wire loop emanating from the second portion, and at least one wire loop emanating from the third portion. In a closed position, the first, second, and third portions are operatively arranged to form a closed handle; and, in an open position, the first, second, and third portions are operatively arranged to form an open handle.

The invention includes a utensil comprising a handle having a first end, a second end, a first portion, at least a second portion wherein the first portion is securable to the at least second portion along a surface arranged between the first end and the second end; and, at least one element emanating from the first portion proximate the first end of the handle and at least one element emanating from the second portion proximate the first end of the handle. In a closed position, the first and second portions are operatively arranged to form a closed handle; and, in an open position, the first and second portions are operatively arranged to form an open handle.

A general object of the invention is to provide a whisk assembly that can be quickly and easily cleaned.

Another object of the invention is to provide a whisk assembly that can be stored more compactly.

A further object of the invention is to provide a whisk assembly that efficiently provides access to all surfaces of the wire loops.

Yet another object of the invention is to provide a whisk assembly whereby the handle and wire loops may be opened and closed.

These and other objects and advantages of the present invention will be readily appreciable from the following description of preferred embodiments of the invention and from the accompanying drawings and claims.

### BRIEF DESCRIPTION OF THE DRAWINGS

The nature and mode of operation of the present invention will now be more fully described in the following detailed description of the invention taken with the accompanying figures, in which:
Figure 1 is a perspective view of a typical whisk;
Figure 2 is a perspective view of a whisk assembly of the invention;
Figure 3 is a front elevational view of the whisk assembly shown in Figure 2;
Figure 4 is a rear elevational view of the whisk assembly shown in Figure 2;
Figure 5 is a left elevational view of the whisk assembly shown in Figure 2;
Figure 6 is a right elevational view of the whisk assembly shown in Figure 2;
Figure 7 is a top plan view of the whisk assembly shown in Figure 2;
Figure 8 is a bottom plan view of the whisk assembly shown in Figure 2;
Figure 9 is a cross-sectional view of the whisk assembly taken generally along line 9-9 in Figure 3;
Figure 10 is a perspective view the whisk assembly of the invention in the open position;
Figure 11 is a front view of the whisk assembly shown in Figure 10;
Figure 12 is a cross-sectional view of the whisk assembly taken generally along line 12-12 in Figure 11;
Figure 13 is a bottom plan view of the whisk assembly of the invention shown in a partially open position; and,
Figure 14 is an alternate embodiment of the whisk assembly.

### DETAILED DESCRIPTION OF THE INVENTION

At the outset, it should be appreciated that like drawing numbers on different drawing views identify identical, or functionally similar, structural elements of the invention. Drawing numbers in prime identify separate structural elements that are identical or functionally similar. While the present invention is described with respect to what is presently considered to be the preferred aspects, it is to be understood that the invention as claimed is not limited to the disclosed aspect. The present invention is intended to include various modifications and equivalent arrangements within the spirit and scope of the appended claims.

Furthermore, it is understood that this invention is not limited to the particular methodology, materials and modifications described and as such may, of course, vary. It is also understood that the terminology used herein is for the purpose of describing particular aspects only, and is not intended to limit the scope of the present invention, which is limited only by the appended claims.

Unless defined otherwise, all technical and scientific terms used herein have the same meaning as commonly understood to one of ordinary skill in the art to which this invention belongs. Although any methods, devices or materials similar or equivalent to those described herein can be used in the practice or testing of the invention, the preferred methods, devices, and materials are now described. Use of the phrase "to protrude further" means the object is longer, taller, or higher. The terms "length" and "height" are used interchangeably. The term "wire loop" is meant to include the structure illustrated in the drawings and labeled **12a, 12b, 12c, 12d, 12e,** and **12f,** but, it should be appreciated that the wire loop could take another shape. For example, the wire loop need not be closed, and may resemble a tine or tines as in a conventional fork.

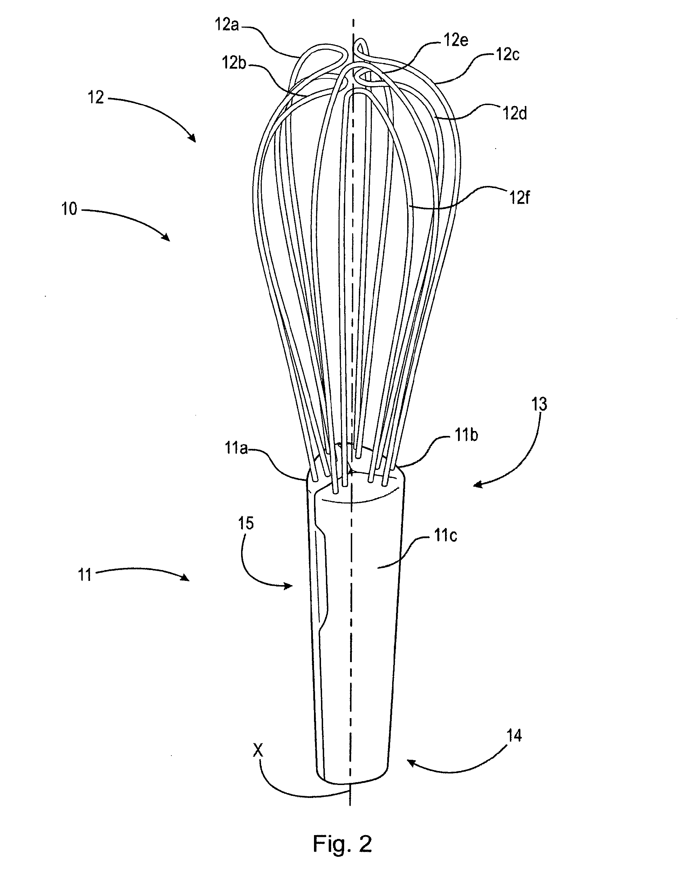

Adverting again to the Figures, Figure 2 is a perspective view of whisk assembly **10** of the present invention. Whisk assembly **10** comprises handle **11** and wire loop assembly **12.** Handle **11** comprises first portion **11a,** second portion **11b,** and third portion **11c.** Wire loop assembly **12** comprises plurality of wire loops: first wire loop **12a,** second wire loop **12b,** third wire loop **12c,** fourth wire loop **12d,** fifth wire loop **12e,** and sixth wire loop **12f,** which emanate from handle **11,** Handle **11** has end **13** and end **14** opposite end **13.** First portion **11a,** second portion **11b,** and third portion **11c** are arranged between and connect end **13** and end **14.** At least one wire loop emanates from first portion **11a,** at least one wire loop emanates from second portion **11b,** and at least one wire loop emanates from third portion **11c.** In an example embodiment, first wire loop **12a** and second wire loop **12b** emanate from first portion **11a** proximate end **13.** Third wire loop **12c** and fourth wire loop **12d** emanate from second portion **11b** proximate end **13.** Fifth wire loop **12e** and sixth wire loop **12f** emanate from third portion **11c** proximate first end **13.** Additional wire loops can emanate from handle **11** as preferred.

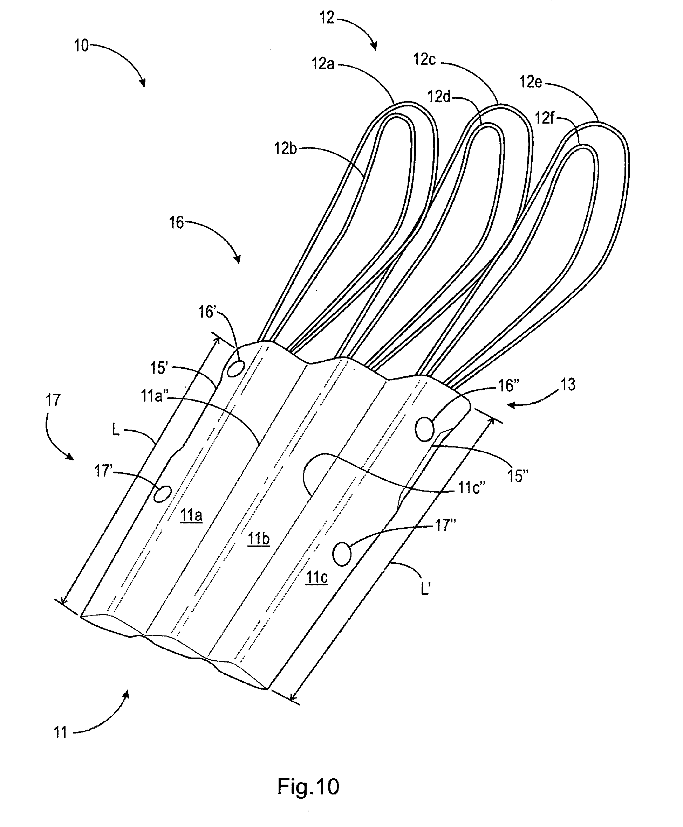

First portion **11a** is hingedly secured to second portion **11b** and second portion **11b** is hingedly secured to third portion **11c.** In an example embodiment, first portion **11a,** second portion **11b,** and third portion **11c** are integrally formed. In another example embodiment, first portion **11a,** second portion **11b,** and third portion **11c** could be integrally formed with hinges **11a"** and **11c"** (to be described further below). In a closed position, as shown in Figures 2 through 9, first, second, and third portions **11a, 11b,** and **11c** are operatively arranged to form a closed handle. In an open position, as shown in Figures 10 through 13, first, second, and third portions **11a, 11b,** and **11c** are operatively arranged to form an open handle.

In an example embodiment, first portion **11a,** second portion **11b,** and third portion **11c** each have a cross-section that is substantially triangular in shape. In an example embodiment, the cross-sections of first portion **11a,** second portion **11b,** and third portion **11c** form an irregular three-dimensional isosceles triangle where the longest side is arcuate. However, it should be appreciated that first portion **11a,** second portion **11b,** and third portion **11c** could form any suitable shape, for example, ring sections.

In an example embodiment, first portion **11a** and third portion **11c** are releasably connected by at least one pair of magnets (not shown in Figures 2 through 8).

First wire loop **12a,** third wire loop **12c,** and fifth wire loop **12e** are longer than second wire loop **12b,** fourth wire loop **12d,** and sixth wire loop **12f,** respectively. First wire loop **12a,** third wire loop **12c,** and fifth wire loop **12e** surround second wire loop **12b,** fourth wire loop **12d,** and sixth wire loop **12f,** respectively. First wire loop **12a** does not intersect with second wire loop **12b,** third wire loop **12c** does not intersect with fourth wire loop **12d,** and fifth wire loop **12e** does not intersect with sixth wire loop **12f.** Wire loop assembly **12** is held within handle **11** proximate end **13** by, for example, acrylonitrile butadiene styrene (ABS) or some other suitable thermoplastic material. Starting from end **13,** plurality of loops: first wire loop **12a,** second wire loop **12b,** third wire loop **12c,** fourth wire loop **12d,** fifth wire loop **12e,** and sixth wire loop **12f** initially emanate radially outward from center axis **X** and subsequently emanate or curve radially inward toward center axis **X**. Wire loops **12a, 12b, 12c, 12d, 12e,** and **12f** are continuous. In other words, at least one wire loop emanating from first portion **11a** also ends within first portion **11a,** at least one wire loop emanating from second portion **11b** also ends within second portion **11b,** and at least one wire loop emanating from third portion **11c** also ends within third portion **11c.** Specifically, first wire loop **12a** and second wire loop **12b** emanate from first portion **11a** and end within first portion **11a.** Third wire loop **12c** and fourth wire loop **12d** emanate from second portion **11b** and end within second portion **11b.** Fifth wire loop **12e** and sixth wire loop **12f** emanate from third portion **11c** and end within third portion **11c.**

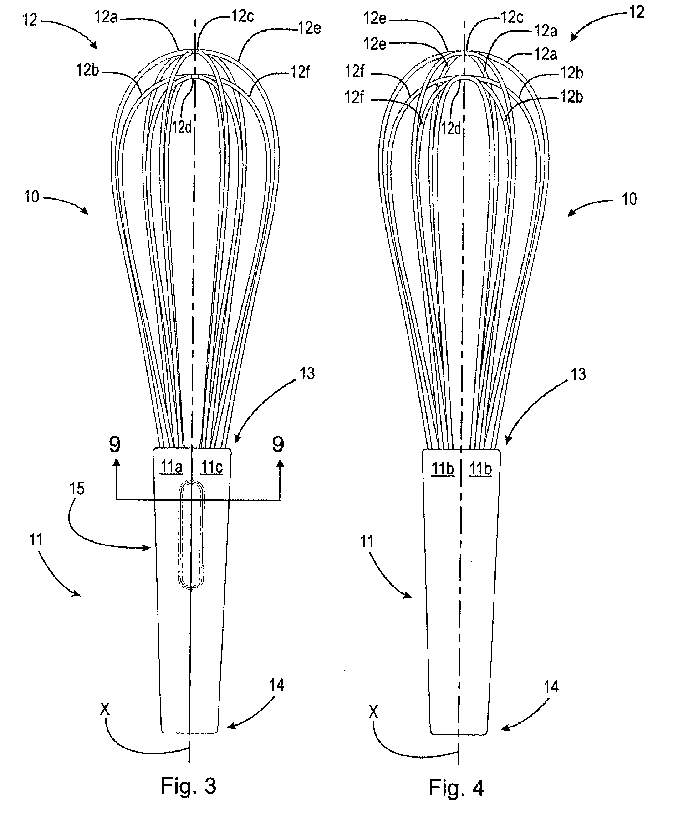

Figure 3 shows a front elevational view of whisk assembly **10.** Handle **11** further comprises indent **15,** which is used to open handle **11.** Second portion **11b** is not visible behind first and third portions **11a** and **11c.** First wire loop **12a** and second wire loop **12b** emanate from first portion **11a** proximate end **13**. Fifth wire loop **12e** and sixth wire loop **12f** emanate from third portion **11c** proximate end **13.** Third wire loop **12c** and fourth wire loop **12d** are partially obstructed behind first, second, fifth, and sixth wire loops **12a, 12b, 12e,** and **12f.** First wire loop **12a,** third wire loop **12c,** and fifth wire loop **12e** protrude upwardly from handle **11** further than second wire loop **12b,** fourth wire loop **12d,** and sixth wire loop **12f,** respectively.

A rear elevational view of whisk assembly **10** is shown in Figure 4. Indent **15** along with first and second portions **11a** and **11b** are not visible behind third portion **11c.** From left to right, plurality of wire loops are arranged as follows: fifth wire loop **12e,** sixth wire loop **12f,** third wire loop **12c,** fourth wire loop **12d,** second wire loop **12b,** and first wire loop **12a,**

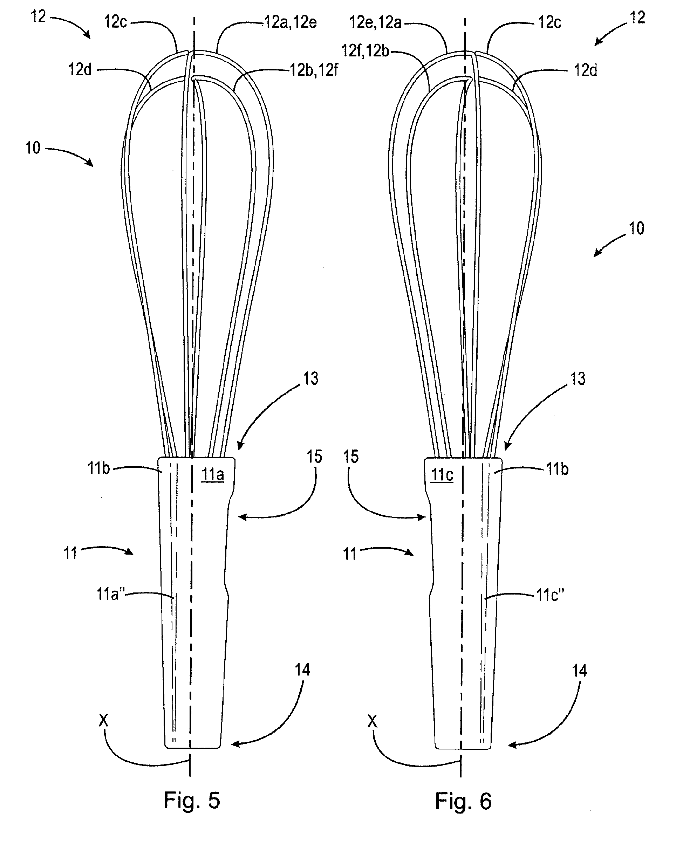

Figures 5 and 6 are left and right elevational views of whisk assembly **10,** respectively. In Figure 5, third portion **11c** is not visible behind first portion **11a** and only a portion of second portion **11b** is visible adjacent to first portion **11a**. First portion **11a** is hingedly connected to second portion **11b** via hinge **11a**". Fifth wire loop **12e** and sixth wire loop **12f** are completely obstructed behind first wire loop **12a** and second wire loop **21b,** respectively. First, third, and fifth wire loops, **12a, 12c,** and **12e,** have substantially similar heights. Similarly, second, fourth, and sixth wire loops, **12b, 12d,** and **12f** have substantially similar heights. In a preferred embodiment, first, third, and fifth wire loops, **12a, 12c,** and **12e** have a height that is different from the height of second, fourth, and sixth wire loops. **12b, 12d,** and **12f.** In Figure 6, first portion **11a** is not visible behind third portion **11c** and only a portion of second portion **11b** is visible adjacent to third portion **11c.** Third portion **11c** is hingedly connected to second portion **11b** via hinge **11c".** First wire loop **12a** and second wire loop **12b** are completely obstructed behind fifth wire loop **12e** and sixth wire loop **12f,** respectively.

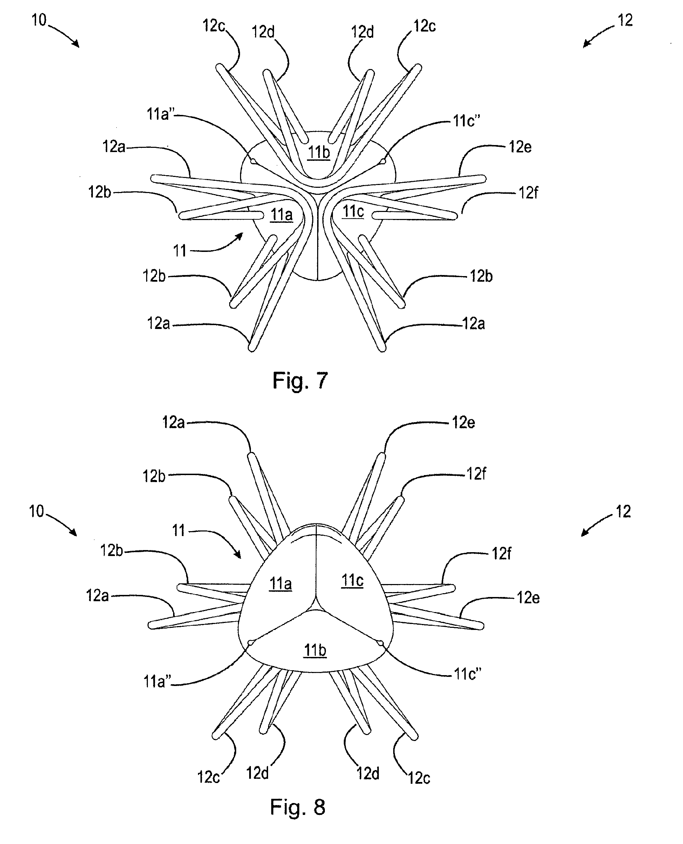

A top plan view of whisk assembly **10** is illustrated in Figure 7. The curved portion of first wire loop **12a** is substantially aligned with the curved portion of second wire loop **12b.** Similarly, the curved portions of wire loops **12c, 12d, 12e,** and **12f are** substantially aligned, respectively. The wire loops widen between the curved portions and handle **11.**

A bottom plan view of whisk assembly **10** is illustrated in Figure 8.

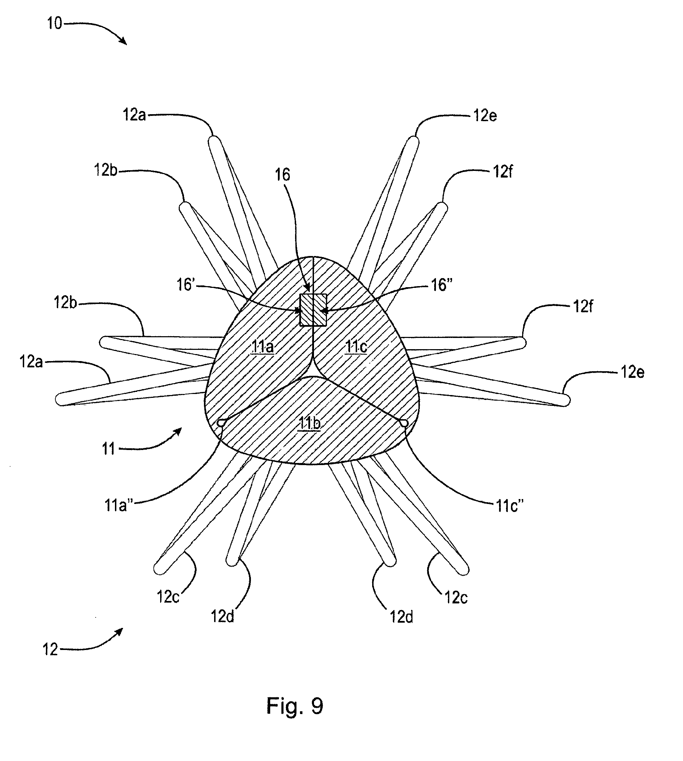

Figure 9 is a cross-sectional view of whisk assembly **10** taken generally along line 9-9 in Figure 3. First portion **11a** and third portion **11c** are releasably connected by at least one pair of magnets **16.** In the closed position, first portion **11a** and third portion **11c** are connected by magnet **16'** and magnet **16".** In an alternate embodiment, First portion **11a** and third portion **11c** are releasably connected by any number of magnets, for example, two pairs of magnets. However, it should be appreciated that first portion **11a** and second portion **11b** could be releasably connected by at least one pair of magnets. It should be further appreciated that second portion **11b** and third portion **11c** could also be releasably connected by at least one pair of magnets. First portion **11a** and third portion **11c** could be releasably connected by any suitable means, for example, hook and loop fastener, a snap, or a latch.

Figure 10 is a perspective view of whisk assembly **10** of the invention in an open position. In the open position, wire loop assembly **12** is easily accessible. Handle portions pivot open about the hinges. In this arrangement, wire loop assembly **12** curves in the same direction. In contrast, when whisk assembly **10** is in the closed position, wire loop assembly **12** curves in opposing directions. In other words, in the closed position, first and second wire loops **12a** and **12b** face the other wire loops **12c, 12d, 12e,** and **12f.** In the closed position, third and fourth wire loops **12c** and **12d** face the other wire loops **12a, 12b, 12e,** and **12b.** In the closed position, fifth and sixth wire loops **12e** and **12g** face the other wire loops **12a, 12b, 12c,** and **12d.** In the open position, no wire loop faces another wire loop. First portion **11a** of handle **11** is defined by length **L;** hinge **11a"** of first portion **11a** is also defined by length **L.** Third portion **11c** is defined by length **L';** hinge **11c"** of third portion **11c** is also defined by length **L'.** Lengths **L** and **L'** can be any appropriate length such that a person can grip handle **11.** Hinge **11a"** of first portion **11a** is substantially similar to hinge **11c"** of third portion **11c.** It should be appreciated that hinges **11a"** and **11c"** could be shorter or longer than portions **11a** and **11c.** Additionally, hinges **11a"** and **11c"** need not be substantially similar.

In an example embodiment, first portion **11a** and third portion **11c** of handle **11** are releasably connected by two pairs of magnets **16** and **17**. Pair of magnets **16** comprises magnet **16'** and magnet **16".** Similarly, pair of magnets **17** comprises magnet **17'** and magnet **17".** However, it should be appreciated that whisk assembly **10** can be connected by any number of pairs of magnets. Magnets are cylindrical but could be any suitable shape, for example, a rectangular prism. Pairs of magnets are formed of rare-earth magnets. The connection could also be accomplished by embedding a permanent magnet in first portion **11a** and a ferromagnetic material in third portion **11c** or vice versa. Indent **15** comprises channels **15'** and **15".** Channel **15'** is within first portion **11a** and channel **15"** is within third portion **11c.** When first and third portions **11a** and **11c** are connected, channels **15'** and **15"** form a single channel or indent **15.** Indent **15** enables a user to press apart first and third portions **11a** and **11c.**

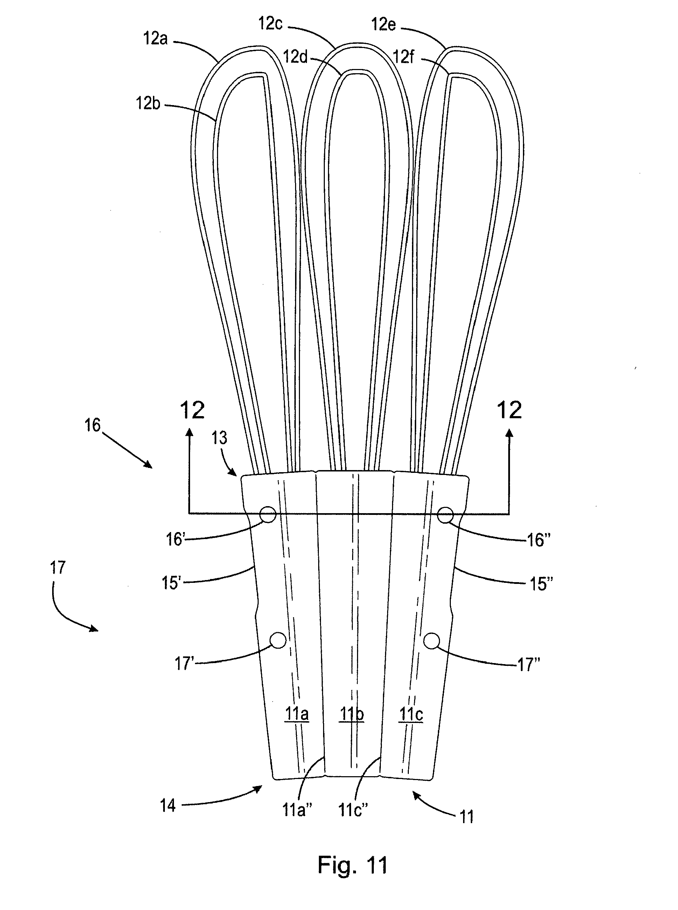

Figure 11 is a front view of whisk assembly **10** shown in Figure 10. In Figure 11, first portion **11a,** second portion **11b.** and third portion **11c** of handle **11** taper between first end **13** and second end **14** of handle **11.** It should be appreciated that handle **11** could be straight between first end **13** and second end **14.** Additionally, the taper of handle **11** could be accentuated or diminished. Alternatively, first portion **11a,** second portion **11b,** and third portion **11c** of handle **11** could be nonlinear.

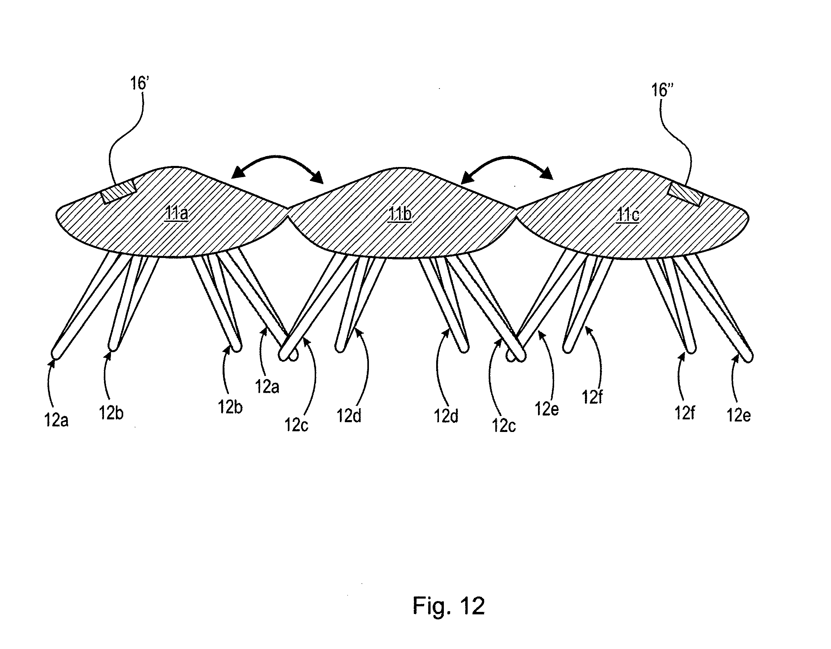

Figure 12 is a cross-sectional view of whisk assembly **10** shown in Figure 11. In the open position, first portion **11a** and third portion **11c** are disconnected along the arrow shown between magnets **16', 16", 17',** and **17".** First portion **11a** does not abut third portion **11c.** Second portion **11b** is between first portion **11a** and third portion **11c.** To attain this open position, a user must apply enough force to indent **15** to overcome the magnetic force between magnets **16', 16", 17',** and **17".** Once the magnetic force is overcome, whisk assembly **10** can remain in the open position. When a person brings first portion **11a** closer to third portion **11c,** along the arrow shown, the magnetic force between magnets **16', 16", 17',** and **17"** grows stronger until first portion **11a** and third portion **11c** are forced together.

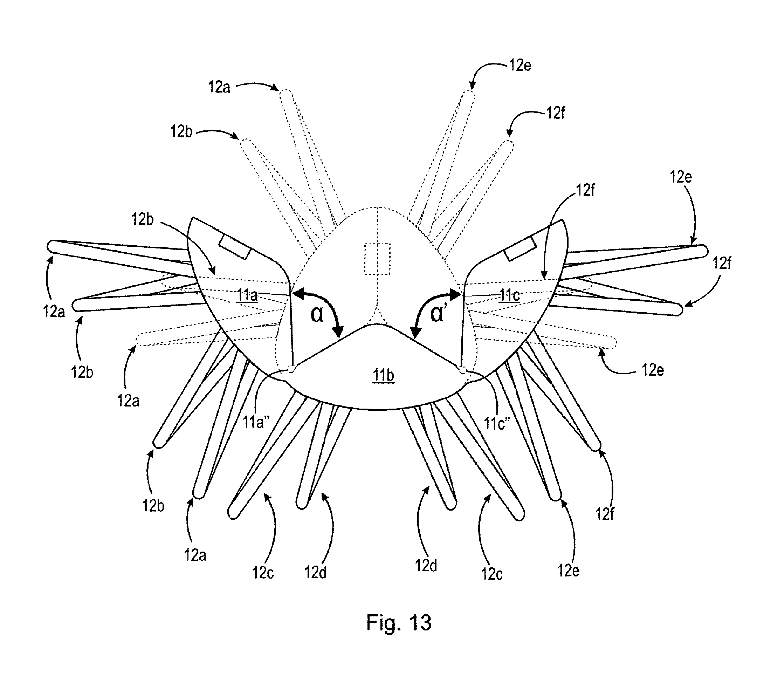

Figure 13 is a bottom plan view of whisk assembly **10** of the invention shown in a partially open position. Broken lines depict a bottom plan view of whisk assembly **10** in a closed position. First portion **11a** is pivotable with respect to second portion **11b** about hinge **11a"** forming angle α. Third portion **11c** is pivotable with respect to second portion **11b** about hinge **11c"** forming angle α'. Angles α and α' are between zero and one hundred and eighty degrees depending on how far open or closed first and third portions **11a** and **11c** are moved. It should be appreciated that first portion **11a** could be in a more open position in relation to second portion **11b** as compared with the position of third portion **11c** in relation to second portion **11b** or vice versa. In other words, angles α and α' proximate hinges **11a"** and **11c",** respectively, do not have to be the same. In an example embodiment, angles α or α' could exceed one hundred and eighty degrees. In any position, wire loop **12a** does not intersect with second wire loop **12b,** third wire loop **12c** does not intersect with fourth wire loop **12d,** and fifth wire loop **12e** does not intersect with sixth wire loop **12f.** Once first and third portions **11a** and **11c** are close enough, pairs of magnets **16** and 17 maintain whisk assembly **10** in a closed position.

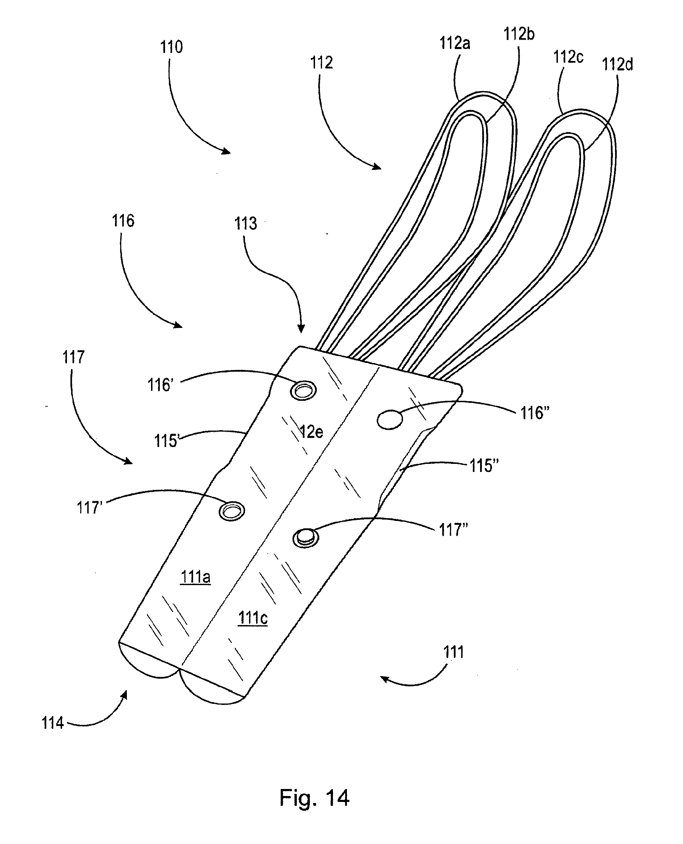

Figure 14 is an alternate embodiment of a whisk assembly of the current invention. Whisk assembly **110** comprises handle **111** and wire loop assembly **112.** Handle **111** comprises first portion **111a,** at least a second portion **111b,** end **113,** and end **114.** Wire loop assembly **112** comprises plurality of wire loops: first wire loop **112a;** second wire loop **112b,** third wire loop **112c,** and fourth wire loop **112d,** which emanate from handle **111** proximate end **113.** At least one wire loop emanates from first portion **111a** and at least one wire loop emanates from second portion **111b.** First portion **111a** and second portion **111b** are arranged between and connect end **113** and end **114.**

First portion **111a** is hingedly secured to second portion **111b** along a surface arranged between end **113** and end **114**. In an example embodiment, first portion **111a** and second portion **111b** are integrally formed. However, it should be appreciated that first portion **111a** and second portion **111b** could be separately formed and secured together via a hinge or some other fastening means. In a closed position (not shown), first portion **111a** and second portion **111b** are operatively arranged to form a closed handle. In an open position, first portion **111a** and second portion **111b** are operatively arranged to form an open handle.

In an example embodiment, first portion **111a** and second portion **111b** each have a cross-section that is substantially semicircular in shape. However, it should be appreciated that first portion **111a** and second portion **111b** could form any suitable shape.

In an example embodiment, first portion **111a** and second portion **111b** are releasably connected by at least one pair of snaps **116** and **117**.

Handle **11** is made of ABS cores with a co-molded thermoplastic rubber exterior. Rubber or silicon could also be used for the exterior of handle **11**. Wire loop assemblies **12** and **112** are made of stainless steel or any other suitable alternative.

Thus, it is seen that the objects of the present invention are efficiently obtained, although modifications and changes to the invention should be readily apparent to those having ordinary skill in the art, which modifications are intended to be within the spirit and scope of the invention as claimed. It also is understood that the foregoing description is illustrative of the present invention and should not be considered as limiting. Therefore, other embodiments of the present invention are possible without departing from the spirit and scope of the present invention.

### REFERENCE NUMERALS

- **1**: whisk assembly
- **2**: handle
- **3**: wire loops
- **4**: person
- **5**: faucet
- **6**: sink
- **10**: whisk assembly
- **11**: handle
- **11a**: handle portion
- **11a'**: hinge
- **11b**: handle portion
- **11c**: handle portion
- **11c'**: hinge
- **12**: wire loop assembly
- **12a**: wire loop
- **12b**: wire loop
- **12c**: wire loop
- **12d**: wire loop
- **12e**: wire loop
- **12f**: wire loop
- **13**: end
- **14**: end
- **X**: center axis
- **15**: indent
- **15'**: channel
- **15"**: channel
- **16**: pair of magnets
- **16'**: magnet
- **16"**: magnet
- **17**: pair of magnets
- **17'**: magnet
- **17"**: magnet
- **L**: length
- **L'**: length
- **α**: angle
- **α'**: angle
- **110**: whisk assembly
- **111**: handle
- **111a**: portion
- **111b**: portion
- **112**: wire loop assembly
- **112a**: wire loop
- **112b**: wire loop
- **112c**: wire loop
- **112d**: wire loop
- **113**: end
- **114**: end
- **115**: indent
- **115'**: channel
- **115'**: channel
- **116**: pair of magnets
- **116'**: magnet
- **116"**: magnet
- **117**: pair of magnets
- **117'**: magnet
- **117"**: magnet

## Claims

1. A whisk assembly, comprising:
a handle (11) having a first end (13), a first portion (11a), a second portion (11b) and a third portion (11c), said first portion (11a) hingedly secured to said second portion (11b) by a first hinge (11a'') and a said second portion (11b) hingedly secured to said third portion (11c) by a second hinge (11c"); and,
a plurality of wire loops (12a, b, c, d, e, f) emanating proximate said first end (13) of said handle (11), at least one wire loop (12 a, b) emanating from said first position (11a), at least one wire loop (12c, d) emanating from said second portion (11b), and at least one wire loop (12e, f) emanating from said third portion (11c);
wherein:
in a closed position, said first, second and third portions (11a, b, c) are operatively arranged to form a closed handle (11); and,
in an open position, said first, second and third portions (11a, b, c) are operatively arranged to form an open handle (12).

2. The whisk assembly recited in Claim 1, wherein said first, second and third portions (11a, b, c) of said handle (11) each have a cross-section that is substantially triangular in shape.

3. The whisk assembly recited in claim 1, wherein said first and third portions (11a, c) of said handle (11) are releasably connected by at least one pair of magnets.

4. The whisk assembly recited in Claim 3, wherein said first and third positions (11a, c) of said handle are releasably connected by two pairs of magnets (16, 17).

5. The whisk assembly recited in claim 1, wherein said first and third portions (11a, c) of said handle (11) are releasably connected by a permanent magnet in one of said first and said third portions (11a, c) and a ferromagnetic material in the other of said first and said third portions (11a, c).

6. The whisk assembly recited in claim 1, wherein said handle has a first length and said first hinge (11a") has a second length substantially equal to said first length.

7. The whisk assembly recited in claim 1, wherein said first hinge (11a") is substantially similar to said second hinge (11c").

8. The whisk assembly recited in claim 1, wherein said first, second and third portions (11a, b, c) said handle taper between said first end and said second end of said handle (11).

9. The whisk assembly recited in claim 1, wherein a first wire loop (12a) and a second wire loop (12b) emanate from said first portion (11a), a third wire loop (12c) and a fourth wire loop (12d) emanate from said second portin (11b), and a fifth wire loop (12e) and a sixth wire loop (12f) emanate from said third portion (11c) proximate said first end of said handle (11).

10. The whisk assembly recited in claim 9, wherein said first, third and fifth wire loops (12a, c, e) are longer than said second, fourth and sixth wire loops (12 b, d, f), respectively.

11. The whisk assembly recited in claim 9, wherein said first, third and fifth wire loops (12a, c, e) surround said second, fourth and sixth wire loops (12b, d, f), respectively.

12. The whisk assembly recited in claim 9, wherein said first wire loop (12a) does not intersect said second wire loop (12b), said third wire loop (12c) does not intersect said fourth wire loop (12d) and said fifth wire loop (12e) does not intersect with said sixth wire loop (12f).

13. The whisk assembly recited in claim 1, wherein said plurality of wire loops (12a, b, c, d, e, f) curve radially inward opposite said handle (11).

14. The whisk assembly recited in claim 1, wherin said at least one wire loop (12a, b) emanating from said first portion (11a) also ends within said first portion (11a), said at least one wire loop (12c, d) emanating from said second portion (11b) also ends within said second portion (11b), and said at least one wire loop (12e, f) emanating from said third portion (11c) also ends within said third potion (11c).

15. The whisk assembly recited in claim 1, wherein said first, second and third portions of said handle are formed as a single integral unit.

16. The whisk assembly recited in claim 1, wherein said first and second hinges (11a", c") are formed as a single integral unit with said first, second and third portions (11a, b, c) of said handle.

17. A utensil, comprising:
a handle having a first end, a second end, a first portion, at least a second portion wherein said first portion is securable to said at least second portion along a surface arranged between said first end and said second end; and,
at least one element emanating from said first portion proximate said first end of said handle;
wherein;
in a closed position, said first and second portions are operatively arranged to form a closed handle; and,
in an open position, said first and second portions are operatively arranged to form an open handle.

18. The utensil recited in clam 17, wherein said first portion is hingedly secured to said second portion by a first hinge.
